# EUROPEAN PATENT APPLICATION

(11) **EP 1 750 024 A2**
(43) Date of publication of application: **07.02.2007**
(21) Application number: 06015072.9
(22) Date of filing: 19.07.2006
(51) Int. Cl.: F16C 29/04, F16C 29/12, F16C 3/035, F16D 3/06, B62D 1/18

(54) **Steering shaft**

(30) Priority: 29.07.2005 JP 2005220450; 28.10.2005 JP 2005313904
(71) Applicant: FUJI KIKO Co., Ltd., Kosai-shi, Shizuoka 431-0431 (JP)
(72) Inventor: Gokano, Hisashi Fuji Kiko Co., Ltd., Shizuoka 431-0431 (JP)
(74) Representative: Grünecker, Kinkeldey, Stockmair & Schwanhäusser Anwaltssozietät

(57) **Abstract**

A steering shaft includes a sleeve member; a shaft member inserted into the sleeve member; at least two rolling element sets each including a plurality of rolling elements, and each being disposed between the sleeve member and the shaft member, the rolling element sets being arranged in a circumferential direction; a plate-shaped gap regulating member disposed between one of the rolling element sets and one of the shaft member and the sleeve member, arranged to be moved in an axial direction, and arranged to form a gap between the shaft member and the sleeve member when the gap regulating member is moved axially in a first direction, and to close the gap when the gap regulating member is moved axially in a second direction opposed to the first direction; and an urging member arranged to urge the gap regulating member in the second direction.

## Description

### BACKGROUND OF THE INVENTION

The present invention relates to a steering shaft capable of telescoping.

A steering apparatus includes a steering shaft rotatably supported in a jacket tube fixed on a vehicle body, and a steering wheel attached to an upper end portion of the steering shaft. The steering apparatus may employ a telescopic mechanism arranged to vary a position of the steering wheel along an axial direction of the steering shaft in accordance with a physical constitution of a driver.

U.S. Patent 4,898,566 (corresponding to Japanese Patent Application Publication 1988(S63)-231010) shows a steering shaft employing the telescoping mechanism including a shaft having a square cross section, a sleeve having a square bore cross section into which the shaft is slidably inserted, and including four central grooves each formed to confront with one side of the square section of the shaft, cylindrical rollers each provided through a roller career in the center groove, and plate springs each disposed between one roller career and the shaft. This steering shaft can prevent a backlash in the rotating direction, transmit rotating force of the sleeve through edge parts (corners) of the square section of the shaft to the shaft, and move the sleeve with reference to the shaft in an axial direction.

### SUMMARY OF THE INVENTION

However, the torque is applied to the sleeve, and compresses the plate spring. The backlash between each of career surfaces of the inner surfaces of the sleeve, and one of the edge parts of the square cross section of the shaft each of which confronts the career surfaces is increased, and the steering feeling adversely affects. Because the rolling elements are disposed on all four sides of the square cross section, and the number of the components is increased. Moreover, the steering shaft has long length in the axial direction, and it is disadvantageous to assembling operation because high dimensional tolerance is required to the shaft and the sleeve at the four sides.

It is an object of the present invention to provide a steering shaft devised to eliminate play between a sleeve and a shaft, and to facilitate the assembly operation.

According to one aspect of the present invention, a steering shaft comprises: a sleeve member; a shaft member inserted into the sleeve member; at least two rolling element sets each including a plurality of rolling elements, and each being disposed between the sleeve member and the shaft member, the rolling element sets being arranged in a circumferential direction; a plate-shaped gap regulating member disposed between one of the rolling element sets and one of the shaft member and the sleeve member, arranged to be moved in an axial direction, and arranged to form a gap between the shaft member and the sleeve member when the gap regulating member is moved axially in a first direction, and to close the gap when the gap regulating member is moved axially in a second direction opposed to the first direction; and an urging member arranged to urge the gap regulating member in the second direction.

### BRIEF DESCRIPTION OF THE DRAWINGS

FIG. 1 is an enlarged sectional view showing a steering shaft according to a first embodiment of the present invention.

FIG. 2 is a sectional view taken along a section line II-II of FIG. 1.

FIG. 3 is an illustrative view showing the steering shaft of FIG. 1.

FIG. 4 is an exploded perspective view showing the steering shaft of FIG. 1.

FIG. 5A is an enlarged sectional view showing a steering shaft according to a second embodiment of the present invention. FIG. 5B is a sectional view taken along a section line VB-VB of FIG. 5A.

FIGS. 6A and 6B are a perspective view and a side view showing a taper slider of the steering shaft of FIG. 5A..

FIG. 7 is an enlarged sectional view showing a steering shaft according to a third embodiment of the present invention.

FIG. 8 is a sectional view taken along a section line VIII-VIII of FIG. 7.

FIG. 9 is an exploded perspective view showing the steering shaft of FIG. 7.

FIG. 10 is a perspective view showing an inner shaft of the steering shaft of FIG. 7.

### DETAILED DESCRIPTION OF THE INVENTION

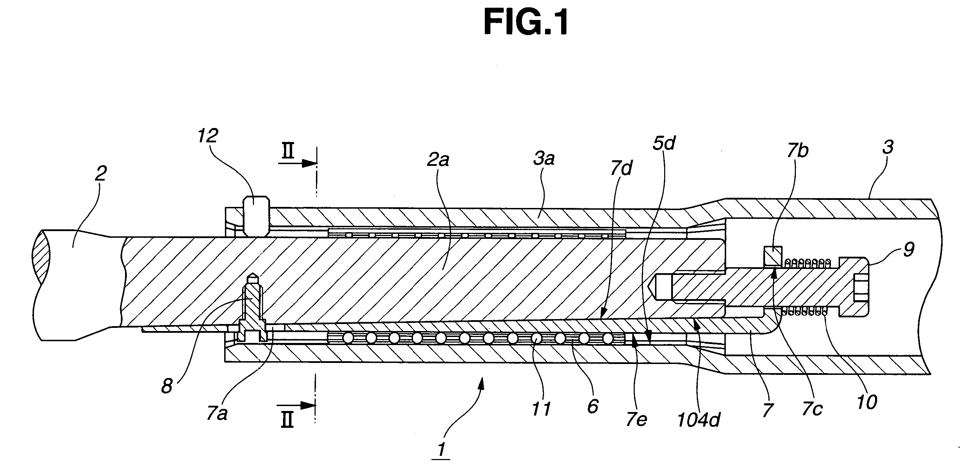

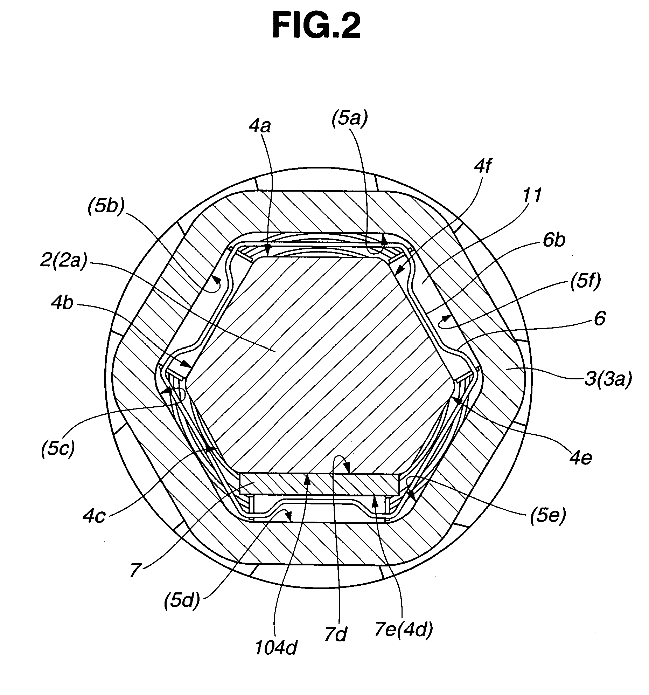

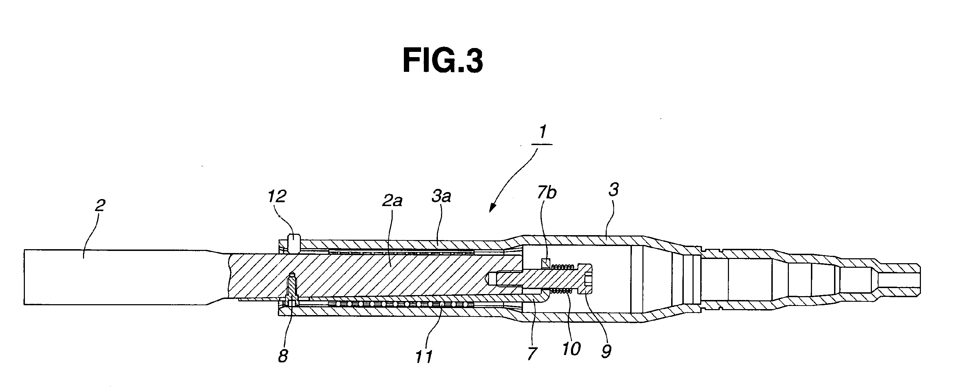

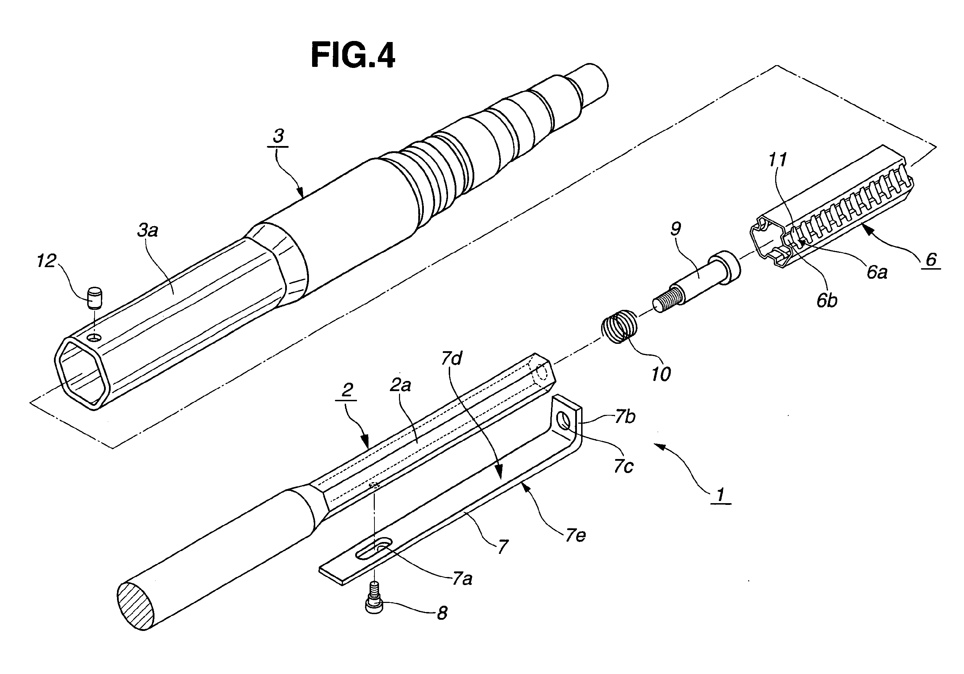

FIG. 1 shows an enlarged sectional view showing a steering shaft 1 according to a first embodiment of the present invention. FIG. 2 shows a sectional view taken along a section line II-II of FIG. 1. FIG. 3 shows a illustrative view showing the steering shaft of FIG. 1. FIG. 4 shows an exploded perspective view showing steering shaft 1 of FIG. 1.

As shown in FIG. 3, steering shaft 1 includes an inner shaft 2 serving as a shaft member, and an outer shaft 3 serving as a cylindrical member or a sleeve member into which inner shaft 2 is inserted. Inner shaft 2 includes a small diameter portion 2a located on a right side of inner shaft 2 in FIG. 1, and arranged to have an outside diameter smaller than an outside diameter of inner shaft 2 on a left side in FIG. 1. Outer shaft 3 includes a small diameter portion 3a located on a right side of outer shaft 3 in FIG. 1, and arranged to have an outside diameter smaller than an outside diameter of outer shaft 3 on a left side in FIG. 1. Small diameter portion 2a of inner shaft 2 is inserted into small diameter portion 3a of outer shaft 3 to be slidably moved in an axial direction.

Small diameter portion 2a of inner shaft 2 includes three rolling surfaces on which rolling elements 11 are rolled. Small diameter portion 3a of outer shaft 3 includes three rolling surfaces each confronting one of the rolling surfaces of inner shaft 2. In a state in which small diameter portion 2a of inner shaft 2 is inserted into small diameter portion 3a of outer shaft 3, rolling elements 11 are disposed between one of the rolling surfaces of small diameter portion 2a and corresponding one of the rolling surfaces of small diameter portion 3a. The rolling surfaces of small diameter portion 2a is substantially parallel to (extends along) the rolling surface of small diameter portion 3a. Three pairs of the sliding surfaces are provided in the circumferential direction. Small diameter portion 2a of inner shaft 2 has a hexagonal cross section. Accordingly, an inner circumference of small diameter portion 3a of outer shaft 3 into which small diameter portion 2a is inserted has a hexagonal cross section.

In this way, small diameter portions 2a and 3a of inner and outer shafts 2 and 3 have the hexagonal cross section respectively, and surfaces 4a~4f of hexagonal outer circumferential surface of small diameter portion 2a and surfaces 5a~5f of hexagonal inner circumferential surface of small diameter portion 3a confront each other, and extend parallel to each other, as shown in FIG. 2. There are six pairs of the rolling surfaces. Each pair of rolling surfaces (4b, 5b), (4d, 5d) and (4f, 5f) includes a plurality of needle rollers 11 serving as rolling members disposed between the pair of the rolling surfaces, and arranged in the axial direction. Of the pairs of rolling surfaces 4a~4f and rolling surfaces 5a~5f, three pairs of rolling surfaces (4b, 5b), (4d, 5d) and (4f, 5f) are arranged alternately in the circumferential direction. That is, there are three rolling sections including the pair of the rolling surfaces and the needle rollers.

There are provided a holder 6 arranged to position and hold the plurality of needle rollers 11. As shown in FIG. 4, holder 6 has three side portions arranged alternately in the circumferential direction, and arranged to hold the plurality of needle rollers 11. That is, holder 6 is formed with notch portions 6a formed alternately in circumferential side surfaces of hexagonal holder 6. Notch portions 6a of holder 6 are arranged in the axial direction at a regular interval so as to receive needle roller 11. Between adjacent two of notch portions 6a, there is a projecting portion 6b projecting radially inwards. Each of needle rollers 11 is held between adjacent two of projecting portions 6b.

Between a rolling surface 104d of inner shaft 2 and rolling surface 5d of outer shaft 3, there is provided a gap regulating member arranged to be slid in the axial direction between inner shaft 2 and needle roller 11. As shown in FIG. 4, taper slider 7 is in the form of an elongated plate. When taper slider 7 is moved rightward (as shown in FIG. 1) in the axial direction, the taper section forms a gap between inner shaft 2 and outer shaft 3. When taper slider 7 is moved leftward (as shown in FIG. 1) in the axial direction, the taper section eliminates or closes the gap between inner shaft 2 and outer shaft 3.

Rolling surface 4d confronting taper slider 7 is cut, and formed with taper surface 104d sloping rightward so that a thickness of small diameter portion 2a becomes smaller gradually rightward. Taper surface 104d of taper slider 7 and the axis of inner shaft 2 form a predetermined angle which is an acute angle. Taper slider 7 includes a movable taper surface or slider taper surface 7d located on an upper side (as shown in FIG. 1) of taper slider 7. Slider taper surface 7d extends substantially parallel to taper surface 104d of small diameter portion 2a of inner shaft 2. On the other hand, taper slider 7 includes a movable rolling surface or slider rolling surface 7e located on a lower side (in FIG. 1) of taper slider 7. Slider rolling surface 7e extends substantially parallel to rolling surface 5d of small diameter portion 3a of sleeve member 3. Taper slider 7 includes an axial portion tapered so that the thickness of the axial portion is decreased from a right end portion to a left end portion. The position of slider rolling surface 7e corresponds to the position of rolling surface 4d of inner shaft 2 before hexagonal small diameter portion 2a is formed with taper surface 104 by cutting.

Taper slider 7 includes a head portion 7b located at the right end portion of the axial portion of taper slider 7 (on the right side as viewed in FIG. 1), and formed by bending taper slider 7 in the form of L-shape, and an oblong hole 7a extending in the axial direction. Oblong hole 7a of taper slider 7 is located at the left end portion of taper slider 7 (on the left side as viewed in FIG. 1). A hexagon socket head bolt 8 is inserted through oblong hole 7a, and screwed into small diameter portion 2a of inner shaft 2 to slide taper slider 7 only in the axial direction. Head portion 7b of taper slider 7 is formed with a hole 7c. A hexagon socket head bolt 9 is inserted through hole 7c of head portion 7b, and screwed into an axial end portion of small diameter portion 2a on the right side in FIG. 1. Between head portion 7b and a head portion of hexagon socket head bolt or fastening device 9, there is provided a spring 10 serving as an urging member. Spring 10 axially urges taper slider 7 leftward so that taper slider 7 penetrates into or wedge into a gap between taper surface 104d of inner shaft 2 and needle rollers 11.

Small diameter portion 2a of inner shaft 2 is cut, and has tapered space between taper surface 104d of inner shaft 2 and needle rollers 11. Taper slider 7 is provided as the gap regulating member, and slid in the axial direction to fill the tapered space. The tapered space of small diameter portion 2a is wider on the right side in FIG. 1, and is narrower on the left side in FIG. 1. Accordingly, small diameter portion 2a does not have the regular hexagonal cross section or equilateral cross section because small diameter portion 2a is cut to form the taper region.

As shown in FIG. 1, there is formed a through hole at an end portion of small diameter portion 3a on the left side in FIG. 1. A retaining pin 12 is provided in the through hole for preventing holder 6 from coming apart from inside small diameter portion 3a of outer shaft 3. Retaining pin 12 projects into small diameter portion 3a. An inner end portion of retaining pin 12 is arranged to abut on an axial end surface of holder 6 on the left side in FIG. 1 to prevent holder 6 from coming apart from small diameter portion 3a.

When taper slider 7 is urged by spring 10, slider rolling surface 7e is pressed to needle rollers 11 in a state in which slider rolling surface 7e is substantially parallel to sliding surface 5d of sleeve member 3. Accordingly, there is no gap between shaft member 2 and sleeve member 3, relative to direct use of regular hexagonal column small diameter portion 2a in which the taper portion is not formed. Needle rollers 11 can be in enable state to roll. That is, the position of slider rolling surface 7e is positioned at a position of rolling surface 4d before the taper region is formed. Exactly, the position of slider rolling surface 7e is positioned at a position at which slider rolling surface 7e is moved radially outward by the gap.

A steering wheel (not shown) is attached to the right end of outer shaft 3. Steering shaft 1 is rotatably supported in a jacket tube (not shown) attached to the vehicle body. Moreover, there is provided a lock section (not shown) of the telescopic mechanism which is arranged to lock outer shaft 3 for preventing the steering wheel from moving in the axial direction, and to release the lock of outer shaft 3 for allowing the axial movement of outer shaft 3 and the steering wheel.

Taper slider 7 is always urged leftward in the axial direction by the urging force of spring 10, and slider taper surface 7d of taper slider 7 is slid with reference to taper surface 104d of inner shaft 2 by the taper action. Consequently, the gap between slider rolling surface 7e of taper slider 7 and needle roller 11 is decreased. That is, slider rolling surface 7e of taper slider 7 is pressed against needle roller 11, there is no gap between rolling surface 5d and needle roller 11, and between needle roller 11 and slider rolling surface 7e, and the appropriate state is set always. The torque is applied to outer shaft 3, and the torque is entirely or directly traveled to inner shaft 2. That is, slider rolling surface 7e of taper slider 7 always urges needle rollers 11 so as to push needle roller 11 downward toward rolling surface 5d. Accordingly, taper slider 7 pushes needle rollers 11 against the lower inner circumference of outer shaft 3 as shown in FIG. 2, and inner shaft 2 is pushed against the upper inner circumference of outer shaft 3 by the reaction force. Therefore, it is possible to always set the appropriate state to exist no gap between inner shaft 2, needle roller 11 and outer shaft 3. The two pair of the rolling surfaces (4b, 5b) and (4f, 5f) are arranged at regular intervals in the circumferential direction. When inner shaft 2 is moved upward (as viewed in FIG. 3) with reference to outer shaft 3, the gap between the rolling surface of small diameter portion 2a and the rolling surface of small diameter portion 3a is decreased. Consequently, between the two pair of rolling surfaces of small diameter portions 2a and 3a, there is no interspace between inner shaft 2 and needle rollers 11, and between the slider rolling surface and the rolling surface, there is no interspace between inner shaft 2 and needle rollers 11 at the same time. Accordingly, when outer shaft 3 is rotated by the rotation of the steering wheel (not shown), the rotation of outer shaft 3 is entirely transmitted to inner shaft 2 because the gap between outer shaft 3 and inner shaft 2 is not existed.

When outer shaft 3 is moved with reference to inner shaft 2 in the axial direction by the telescopic mechanism, the lock of the telescopic section is released, and the steering wheel is moved in the axial direction. Outer shaft 3 receives the force in the axial direction, needle rollers 11 located between two pair of rolling surfaces (4b, 5b) and (4f, 5f), and between slider rolling surface 7e and rolling surface 5d are rolled on the rolling surfaces, inner shaft 2 is slid in relation to outer shaft 3, so that the telescopic operation of the steering shaft is operated. The lock of the telescopic section is set after outer shaft 3 is moved.

Next, method (procedure) of assembly operation of outer shaft 3 and inner shaft 2 is illustrated. Firstly, hexagon socket head bolt 9 is inserted through spring 10 and hole 7c of head portion 7b of taper slider 7, and screwed into the axial end surface of inner shaft 2 on the right side in FIG. 1. Secondly, hexagon socket head bolt 8 is inserted through oblong hole 7a, and screwed into taper surface 104d of inner shaft 2, so that taper slider 7 is mounted to inner shaft 2. Thirdly, the axial end portion of taper slider 7 on the left side in FIG. 1 is moved in the rightward direction in which taper slider 7 is separated from the taper space, against the bias force by spring 10, and needle rollers 11 and holders 6 holding needle rollers 11 are mounted on inner shaft 2. Finally, inner shaft 2 is inserted from the left side of FIG. 1 into outer shaft 3 together with needle rollers 11 and holder 6. Because taper slider 7 is moved in the direction in which taper slider 7 is away from the taper space, there is the gap between taper slider 7 and needle rollers 11. In the pairs of the rolling surfaces (4b, 5b) and (4f, 5f), there are the gaps between inner shaft 2 and needle rollers 11 at the same time. Accordingly, it is possible to facilitate the insertion of inner shaft 2 into outer shaft 3.

After the insertion operation, the axial end portion of taper slider 7 is released. Taper slider 7 is moved toward the taper space in the left direction by the urging force. In the pair of rolling surfaces (4b, 5b), the pair of rolling surfaces (4f, 5f), and the pair of slider rolling surface 7e and rolling surface 5d, the gap between inner shaft 2 and needle rollers 11 does not exist at the same time, so that the play between outer shaft 3 and inner shaft 2 is eliminated. Subsequently, holding pin 12 is inserted into outer shaft 3.

In the device according to the first embodiment of the present invention, even when outer shaft 3 is applied with the torque, taper slider 7 does not move rightward as viewed in FIG. 1 against the urging force of spring 10. Spring 10 does not receive the force in the direction in which spring 10 is compressed. Accordingly, the backlash between inner shaft 2 and outer shaft 3 is not generated. Moreover, needle rollers 11 roll between rolling surface 5d and slider rolling surface 7e, and outer shaft 3 is moved (slid) relative to inner shaft 2 in the axial direction. Steering shaft 1 can be smoothly retractable or telescopic by the combination of outer shaft 3 and inner shaft 2.

In the device according to the first embodiment of the present invention, the rolling sections are disposed alternately between each side of hexagonal small diameter portion 2a and corresponding side of hexagonal small diameter portion 3a. Accordingly, taper slider 7 is provided only to one rolling section, and it is possible to prevent the backlash in the circumferential direction and/or the.radial direction. Moreover, there is provided needle rollers 11 serving as the rollers of the rolling section or rolling element set, holder 6 holds the three rolling element sets of needle rollers 11 arranged in the circumferential direction, and it is possible to hold the relative position of the three sets of needle rollers 11 constant. Therefore, it is possible to form the steering shaft arranged to act the telescopic operation.

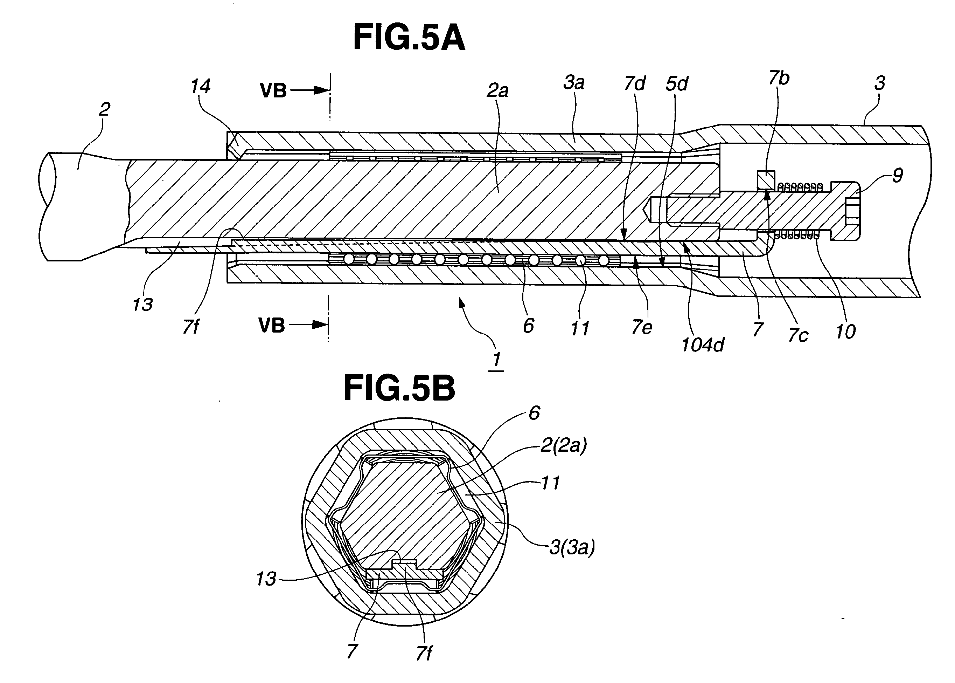

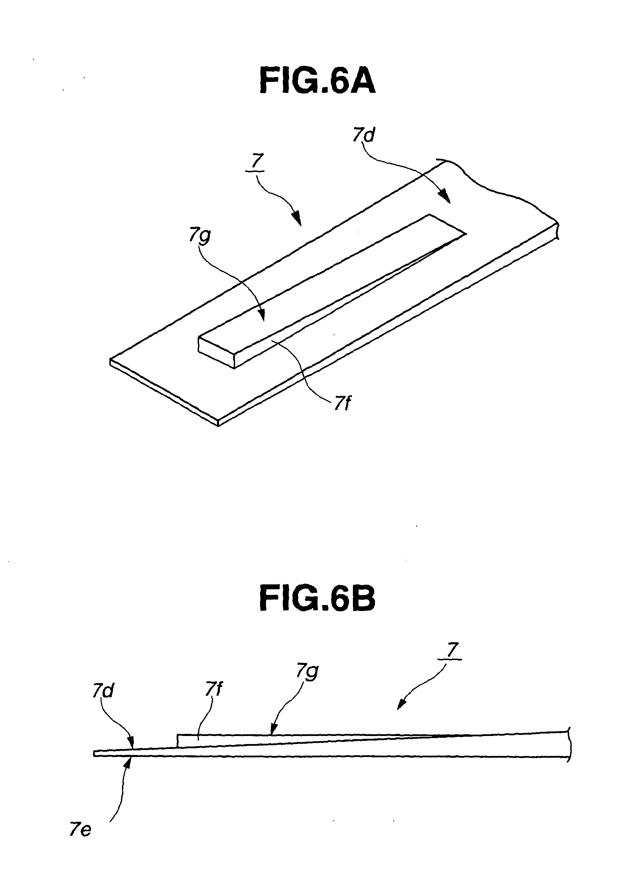

(Second embodiment) FIG. 5A shows a steering shaft according to a second embodiment of the present invention. FIG. 5B shows, in section, an enlarged view of the steering shaft of FIG. 5A. FIG. 6A and 6B show a perspective view and a side view of the steering shaft of FIG. 5A. The steering shaft of FIG. 5A is substantially identical to the structure of FIG. 1 in most aspects as shown by the use of the same reference numerals.

As shown in FIG. 5, a guide groove 13 is formed at a central position of taper surface 104d formed in the outer circumferential surface of small diameter portion 2a. Guide groove 13 extends in the axial direction. As shown in FIG. 5A, guide groove 13 includes a bottom portion extending along a central axis of small diameter portion 2a, and taper surface 104d is inclined with reference to the central axis. Therefore, guide groove 13 is formed from the end portion of inner shaft 2 on the left side in FIG. 5 to the middle portion of inner shaft 2 in FIG. 5.

On the other hand, slider taper surface 7d of taper slider 7 is formed with a guide raised portion 7f arranged to be slidably moved along guide groove 13, as shown in FIG.6. Guide raised portion 7f includes an upper surface 7g extending substantially parallel to slider rolling surface 7e of lower surface of taper slider 7. Guide raised portion 7f extends from a left end portion of taper slider 7 to the middle portion in FIG. 6.

In the device according to the second embodiment of the present invention, a caulking portion 14 is formed at least one side of the hexagon, and formed at left end portion of outer shaft 3, instead of holding pin 12 for preventing holder 6 from coming away (apart) from inside small diameter portion 3a of outer shaft 3. Calking portion 14 projects radially inwards from the inner circumferential portion of small diameter portion 3a.

In the device according to the second embodiment of the present invention, taper surface 104d is formed on the outer circumferential surface of small diameter portion 2a, and guide groove 13 is formed in taper surface 104d. Guide raised portion 7f is formed on slider taper surface 7d of taper slider 7, and accordingly circumferential movement of small diameter portion 2a is limited. In this state, taper slider 7 can be moved only along the axial direction. Accordingly, degree of parallelization of slider rolling surface 7e of taper slider 7 with reference to rolling surface 5d formed in small diameter portion 3a is stabile, and sliding ability of taper slider 7 is improved.

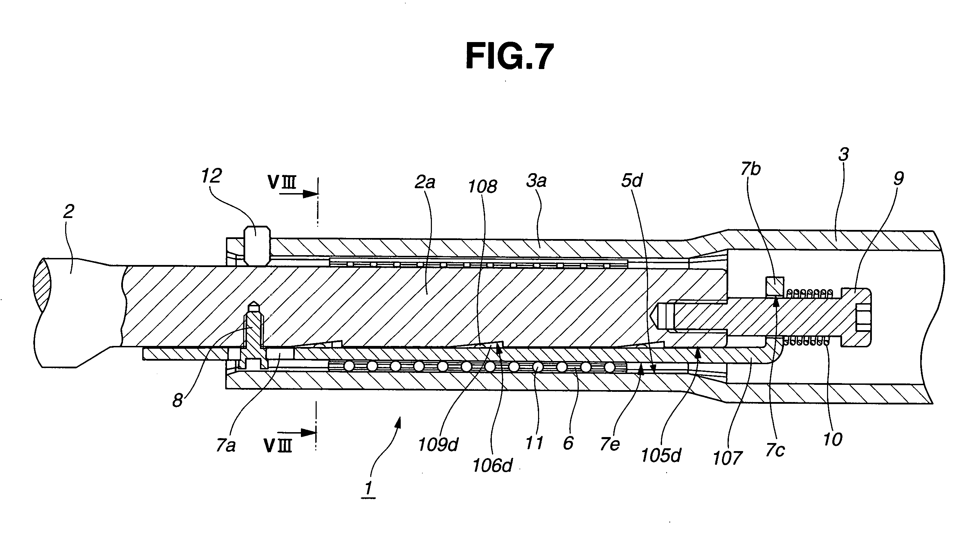

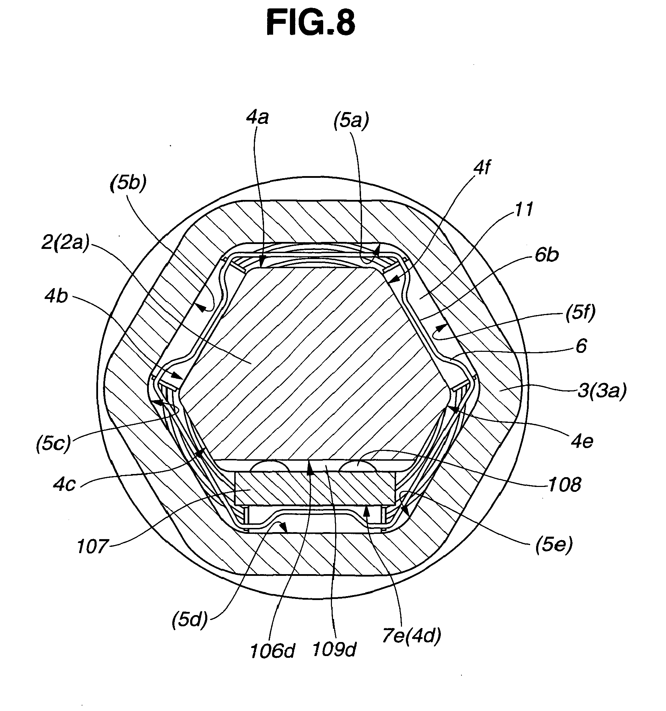

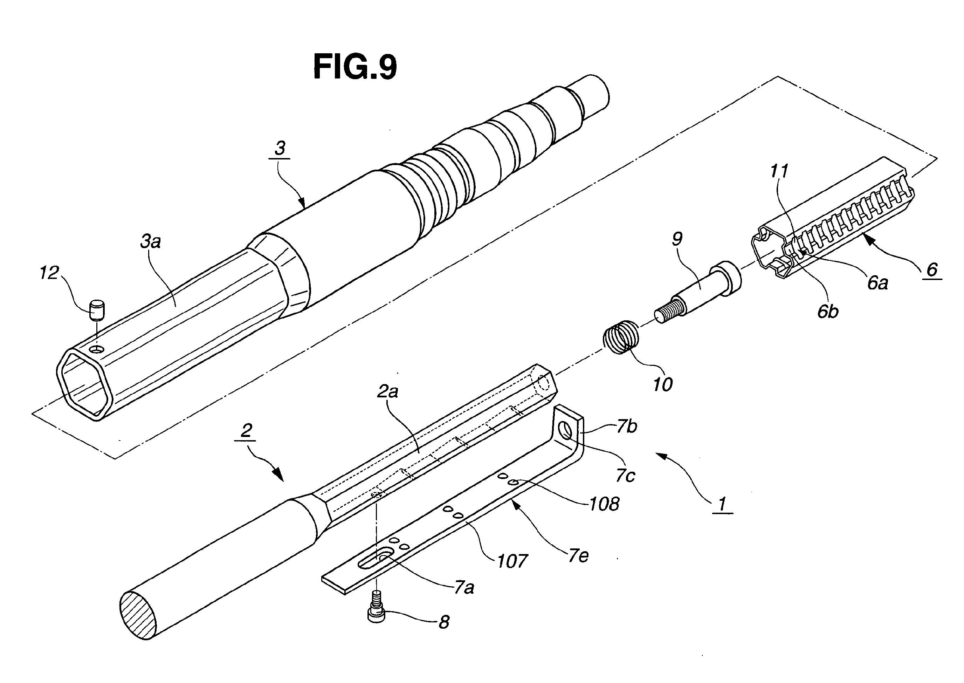

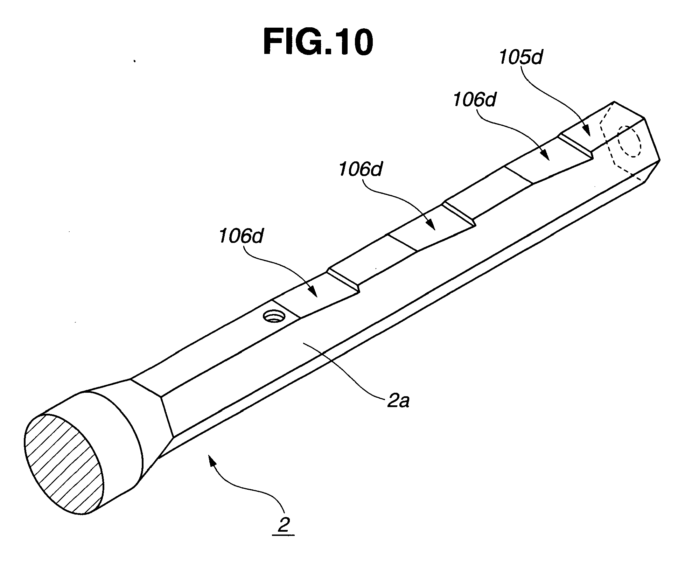

(Third embodiment) FIG. 7 shows a steering shaft according to the third embodiment of the present invention. FIG. 8 shows, in section, an enlarged view of the steering shaft of FIG. 7. FIG. 9 shows an exploded perspective view of the steering shaft of FIG. 7. FIG. 10 shows a perspective view of an inner shaft the steering shaft of FIG. 7. The steering shaft of FIG. 7 is substantially identical to the structure of FIG. 1 in most aspects as shown by the use of the same reference numerals.

Steering shaft 1 includes a slider 107 which does not have the taper surface, instead of taper slider 7 of the steering shaft according to the first and second embodiments. As shown in FIG. 7, the surface of small diameter portion 2a which confronts slider 107, and which is located on the lower side in FIG. 7 is formed with a parallel surface 105d parallel to the center axis of inner shaft 2, unlike taper surface 104d according to the first embodiment. Parallel surface 105d is formed with recessed portions 109d each including a bottomed surface (taper surface 106d) having a depth larger on the right side than a depth on the left side. In the third embodiment, three taper surfaces 106d is formed to be arranged in the axial direction.

On the other hand, slider 107 is formed with three spherical projection pairs each located at a position to confront one of taper surfaces 106d. Each of spherical projection pairs includes a pair of spherical projections 108 projecting toward the corresponding taper surface 106d. As shown in FIG. 9, each of spherical projections 108 is in the form of dome or bubble projecting from the surface of slider 107. Two spherical projections 108 of each spherical projection pair are arranged in a widthwise direction substantially perpendicular to the longitudinal direction of slider 107. Two spherical projections 108 of each spherical projection pair are inserted into the corresponding recessed portion 109d formed in taper surface 106d of small diameter portion 2a.

At the assembling operation of outer shaft 3 and inner shaft 2, an axial end portion of slider 107 on the left side in FIG. 7 is slid rightward against the urging force of spring 10, and inner shaft 2, needle roller 11, and holder 6 are inserted into outer shaft 3, like the assembling operation according to the first embodiment. Each spherical pair of spherical projections 108 is entirely inserted into corresponding recessed portion 109d because slider 107 is moved rightward with reference to inner shaft 2. That is, the interspace between slider 107 and needle rollers 11 is generated because of the action of taper surface 106d and spherical projections 108, and it is possible to facilitate the insertion operation of inner shaft 2. After the insertion operation of inner shaft 2, the axial end portion of slider 107 is released. Subsequently, slider 107 is moved leftward in FIG. 7 by the urging force of spring 10, and each pair of spherical projections 108 are overridden on corresponding taper surface 106d. That is, the interspace between slider 107 and needle rollers 11 is closed because of the action of taper surface 106d and spherical projection 108, and the backlash between outer shaft 3 and inner shaft 2 is eliminated.

In the device according to the third embodiment of the present invention, inner shaft 2 is formed with taper surfaces 107, and slider 107 is formed with spherical projection pairs each including two spherical projections 108, and each formed at a position to confront one taper surface 107. Two spherical projections 108 of each spherical projection pair are slid in contact with the corresponding taper surface 107, and the gap between slider rolling surface 7e of slider 107 and needle rollers 11 is decreased.

In the device according to the third embodiment of the present invention, slider 107 is merely provided with the plurality of projections, and it is possible to facilitate manufacturing slider 107 relative to the manufacture of the slider taper surface.

In the embodiments according to the present invention, each of the small diameter portions of the inner and outer shafts has the hexagonal cross section. Moreover, each of the small diameter portions of the inner and outer shafts may have an oval section or a rectangular section because at least two of the rolling sections may be provided in the circumferential direction and one of two rolling sections may be provided with the gap regulating member. Inner shaft 2 may have a triangle cross section instead of the hexagonal cross section, outer shaft 3 may have a triangle hollow cross section instead of the hexagonal hollow cross section, all side surfaces of the triangle cross sections of the inner shaft and the outer shaft may be provided with the rolling sections. Moreover, rolling surface 5d of inner circumference of small diameter portion 3a of the sleeve member may be cut radially outwards to form the taper surface, and the taper space can be formed between needle rollers 11 and rolling surface 5d. In the third embodiment, the slider is formed with the dome-shaped spherical protrusions projecting from the surface of the slider, and the slider is applicable to form taper surfaces which are the same number as the taper surfaces formed in the small diameter portion of the inner shaft, and each of which is substantially parallel with the taper surface.

The steering shaft according to the embodiments of the present invention includes: a sleeve member; a shaft member inserted into the sleeve member; at least two rolling element sets each including a plurality of rolling elements, and each being disposed between the sleeve member and the shaft member, the rolling element sets being arranged in a circumferential direction; a plate-shaped gap regulating member disposed between one of the rolling element sets and one of the shaft member and the sleeve member, arranged to be moved in an axial direction, and arranged to form a gap between the shaft member and the sleeve member when the gap regulating member is moved axially in a first direction, and to close the gap when the gap regulating member is moved axially in a second direction opposed to the first direction; and an urging member arranged to urge the gap regulating member in the second direction.

The urging member always urges the gap regulating member axially in the second direction, and thereby the slider rolling surface of the gap regulating member is pushed against the rolling members by the taper action. Consequently, it is possible to keep an appropriate state to exist no gap between the slider rolling surface and the rolling members, and between the rolling members and the rolling surface. The torque is applied to the sleeve member, and the torque is directly transmitted to the shaft member. When the shaft member is applied with the torque, the urging section is not applied with the load to compress the urging section. Accordingly, the gap regulating member is not moved in the direction to compress the urging section, and there is no gap (backlash) between the shaft member and the sleeve member.

The rolling members rolls between the movable rolling surface and the rolling surface, and the cylindrical member is slid with reference to (relative to) the shaft member in the axial direction, and the steering shaft including the cylindrical member and the shaft member is smoothly slid.

In the illustrated embodiments, the sleeve member includes a rolling surface on which the rolling elements are rolled; the shaft member includes a rolling surface which confronts the rolling surface of the sleeve member, and which is substantially parallel to the rolling surface of the sleeve member; and the other of the rolling element sets is disposed between the rolling surface of the sleeve member and the rolling surface of the shaft member. The sleeve member includes a rolling surface on which the rolling elements are rolled; the shaft member includes a rolling surface which confronts the rolling surface of the sleeve member, and which is substantially parallel to the rolling surface of the sleeve member; and the other of the rolling element sets is disposed between the rolling surface of the sleeve member and the rolling surface of the shaft member.

The inclined taper surface of the gap regulating member is slide with reference to the inclined taper surface of the other of the shaft member and the sleeve member. Accordingly, the gap between the rolling members and the slider rolling surface of the gap regulating member is decreased.

In the illustrated embodiments, the gap regulating member includes a plurality of projections projecting toward the other of the shaft member and the sleeve member; and the projections of the gap regulating member is arranged in a longitudinal direction of the gap regulating member. The gap regulating member extends from a first end to a second end in the first direction; and each of the projections of the gap regulating member has a taper surface sloping toward the first end of the gap regulating member so that a thickness of the projection becomes smaller gradually toward the first end. the other of the shaft member and the sleeve member includes a plurality of recessed portions each having a taper surface confronting one of the projections of the gap regulating member, and extending substantially in parallel to the one of the taper surfaces of the projections of the gap regulating member.

Each of the taper surfaces of the gap regulating member is slide with reference to the corresponding taper surface of the other of the shaft member and the sleeve member. Accordingly, the gap between the rolling members and the slider rolling surface of the gap regulating member is decreased.

In the illustrated embodiments, the gap regulating member includes a plurality of projection sets arranged in a longitudinal direction of the gap regulating member; each of the projection sets of gap regulating member includes a plurality of projections arranged in a widthwise direction of the gap regulating member which is perpendicular to the longitudinal direction of the gap regulating member; and each of the projections of the projecting sets projects toward the other of the shaft member and the sleeve member. The other of the shaft member and the sleeve member includes a plurality of recessed portions each having a taper surface confronting one of the projections of the gap regulating member; and each of the recessed portions slopes so that a depth of the each of recessed portions becomes smaller gradually in the second direction.

The gap regulating member is only formed with a plurality of protrusions, and it is advantageous to fabricate manufacture of the gap regulating member easily in comparison with the manufacture of the slider taper surface.

In the illustrated embodiments, the steering shaft comprises three rolling element sets including the at least two rolling element sets; the shaft member has a hexagonal cross section; the sleeve member has a hexagonal hollow cross section; and the rolling element sets are arranged alternately in the circumferential direction between side surfaces of the shaft member and side surfaces of the sleeve member. Or the shaft member has a triangle cross section; the sleeve member has a triangle hollow cross section; and each of the rolling element sets are arranged in the circumferential direction between one of side surfaces of the shaft member and one of side surfaces of the sleeve member.

The rolling sections are disposed in all the side surfaces of the triangle, or disposed in the side surfaces of the hexagon alternately. One of the rolling sections is provided with the gap regulating member, and it is possible to prevent the backlash in the circumferential direction and/or the radial direction. The rollers serving as the rolling members of the rolling section is provided, and the three rolling element sets of rollers disposed in the circumferential direction is hold by the holder. Accordingly, it is possible to hold relative position among the three pairs of rollers constantly.

In the illustrated embodiments, the other of the shaft member and the sleeve member is formed with a groove extending in the axial direction; and the taper surface of the gap regulating member is formed with a raised portion extending in the axial direction so that the gap regulating member is moved axially along the groove of the other of the shaft member and the sleeve member.

The rolling surface of the shaft member includes the inclined taper surface formed with the guide groove, the gap regulating member includes the slider tapered surface formed with the guide raised portion, and it is possible to limit the circumferential movement of the gap regulating member, and to move the gap regulating member in the axial direction along the guide groove. Accordingly, it is possible to improve the sliding ability of the gap regulating member, and to stabilize the degree of parallelization of slider rolling surface of the gap regulating member.

In the steering shaft according to the embodiments of the present invention, the urging section always urges the gap regulating member in the second direction, and the gap regulating member push the rolling members against the other of the rolling surface. Consequently, the backlash between the shaft member and the sleeve member is not generated, and it is possible attain the good steering feeling when the sleeve member is rotated. The vertical pivotal movement of the steering shaft is operated without the resistance because of the relative movement between the shaft member and the sleeve member, and it is possible to lightly (easily) operate the telescopic operation. Moreover, at the assembling operation, the gap regulating member is moved axially in the first direction against the bias force of the urging section, and the interspace between the shaft member and the sleeve member is increased. Accordingly, it is possible to insert the sleeve member, and to facilitate the assemblage.

The steering shaft according to the embodiments includes the taper section including a plurality of the taper surfaces and a plurality of the projections, the taper angle is set freely in some extent, irrespective of the length of the gap regulating member. Accordingly, it is possible to increase the degree of the freedom to set the absorbing the variation in the dimension and the variation in the preload to push the rolling members through the taper section by the urging section. In a case in which the slide amount is increased when the taper surface is one surface, a plurality of the taper surfaces or a plurality of the protrusions are provided, it is possible to facilitate the manufacture because processing accuracy is not needed relative to a case in which the gap regulating member is formed with the taper surface extending in the entire length.

The shaft member and the sleeve member have substantially triangle cross section or substantially hexagonal cross section, and each of the three sides of the triangle are provided with the rolling section, each of the three sides of the hexagonal are provided with the rolling section. The rolling section is provided with the gap regulating section urged by the urging section, and the interspace between the shaft member and the rolling members, and the interspace between the sleeve member and the rolling members are decreased in the three direction at the same time, and it is possible to decrease the number of the components.

This application is based on a prior Japanese Patent Application No. 2005-220450 filed on July 29, 2005, and a prior Japanese Patent Application No. 2005-313904 filed on October 28, 2005. The entire contents of these Japanese Patent Applications No. 2005-220450 and No. 2005-313904 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A steering shaft comprising:
a sleeve member;
a shaft member inserted into the sleeve member;
at least two rolling element sets each including a plurality of rolling elements, and each being disposed between the sleeve member and the shaft member, the rolling element sets being arranged in a circumferential direction;
a plate-shaped gap regulating member disposed between one of the rolling element sets and one of the shaft member and the sleeve member, arranged to be moved in an axial direction, and arranged to form a gap between the shaft member and the sleeve member when the gap regulating member is moved axially in a first direction, and to close the gap when the gap regulating member is moved axially in a second direction opposed to the first direction; and
an urging member arranged to urge the gap regulating member in the second direction.

2. The steering shaft as claimed in Claim 1, wherein the sleeve member includes a rolling surface on which the rolling elements are rolled; the shaft member includes a rolling surface which confronts the rolling surface of the sleeve member, and which is substantially parallel to the rolling surface of the sleeve member; and the other of the rolling element sets is disposed between the rolling surface of the sleeve member and the rolling surface of the shaft member.

3. The steering shaft as claimed in Claim 2, wherein the gap regulating member extends from a first end to a second end in the first direction, the gap regulating member includes a taper surface sloping toward the first end of the gap regulating member so that a thickness of the gap regulating member becomes smaller gradually toward the first end; and the other of the shaft member and the sleeve member includes a taper surface confronting the taper surface of the gap regulating member, and extending substantially in parallel to the taper surface of the gap regulating member.

4. The steering shaft as claimed in Claim 2, wherein the gap regulating member includes a plurality of projection sets arranged in a longitudinal direction of the gap regulating member; each of the projection sets of gap regulating member includes a plurality of projections arranged in a widthwise direction of the gap regulating member which is perpendicular to the longitudinal direction of the gap regulating member; and each of the projections of the projecting sets projects toward the other of the shaft member and the sleeve member.

5. The steering shaft as claimed in Claim 4, wherein each of the projections of the gap regulating member is a spherical projection.

6. The steering shaft as claimed in Claim 5, wherein the other of the shaft member and the sleeve member includes a plurality of recessed portions each having a taper surface confronting one of the projections of the gap regulating member; and each of the recessed portions slopes so that a depth of the each of recessed portions becomes smaller gradually in the second direction.

7. The steering shaft as claimed in Claim 2, wherein the gap regulating member includes a plurality of projections projecting toward the other of the shaft member and the sleeve member; and the projections of the gap regulating member is arranged in a longitudinal direction of the gap regulating member.

8. The steering shaft as claimed in Claim 7, wherein the gap regulating member extends from a first end to a second end in the first direction; and each of the projections of the gap regulating member has a taper surface sloping toward the first end of the gap regulating member so that a thickness of the projection becomes smaller gradually toward the first end.

9. The steering shaft as claimed in Claim 8, wherein the other of the shaft member and the sleeve member includes a plurality of recessed portions each having a taper surface confronting one of the projections of the gap regulating member, and extending substantially in parallel to the one of the taper surfaces of the projections of the gap regulating member.

10. The steering shaft as claimed in Claim 1, wherein the steering shaft comprises three rolling element sets including the at least two rolling element sets; the shaft member has a hexagonal cross section; the sleeve member has a hexagonal hollow cross section; and the rolling element sets are arranged alternately in the circumferential direction between side surfaces of the shaft member and side surfaces of the sleeve member.

11. The steering shaft as claimed in Claim 1, wherein three rolling element sets including the at least two rolling element sets; the shaft member has a triangle cross section; the sleeve member has a triangle hollow cross section; and each of the rolling element sets are arranged in the circumferential direction between one of side surfaces of the shaft member and one of side surfaces of the sleeve member.

12. The steering shaft as claimed in Claim 1, wherein each of the rolling elements is a roller; the steering shaft further comprises a roller holder holding the rollers arranged in the axial direction.

13. The steering shaft as claimed in Claim 1, wherein the gap regulating member includes an axial portion extending from a first end to a second end in the first direction, and being disposed between the shaft member and the sleeve member, and a head portion extending from the second end of the axial portion in a direction substantially perpendicular to the axial portion.

14. The steering shaft as claimed in Claim 1, wherein the steering shaft further comprises a fastening device inserted into the shaft member, and arranged to support the urging member to urge the gap regulating member in the second direction.

15. The steering shaft as claimed in Claim 3, wherein the other of the shaft member and the sleeve member is formed with a groove extending in the axial direction; and the taper surface of the gap regulating member is formed with a raised portion extending in the axial direction so that the gap regulating member is moved axially along the groove of the other of the shaft member and the sleeve member.
